# EUROPEAN PATENT APPLICATION

(11) **EP 2 962 983 A1**
(43) Date of publication of application: **06.01.2016**
(21) Application number: 13876672.0
(22) Date of filing: 27.11.2013
(51) Int. Cl.: B67D 1/14, B67D 1/08

(54) **WATER SERVER**

(30) Priority: 28.02.2013 JP 2013039212
(71) Applicant: Kabushiki Kaisha Cosmo Life, Kakogawa-shi Hyogo 675-0032 (JP)
(72) Inventor: ORITA Yoshinori, Kakogawa-shi Hyogo 675-0068 (JP)
(74) Representative: Grünecker Patent- und Rechtsanwälte PartG mbB
(86) International application number: PCT/JP2013/081928
(87) International publication number: WO 2014/132507

(57) **Abstract**

A water dispenser is provided which includes a cold water discharging mechanism (8) and a hot water discharging mechanism (9), each of the cold water discharging mechanism (8) and the hot water discharging mechanism (9) including: a valve body (42) provided in each of cold water and hot water discharging pipes; a locking member (46) configured to block the movement of the valve body (42) to an open position; and a key member (50) configured to maintain a state where each of the cold water discharging mechanism (8) and the hot water discharging mechanism (9) is unlocked. When each of the cold water discharging mechanism (8) and the hot water discharging mechanism (9) is in the unlocked state, the key member (50) is configured to come into contact with an unlocking button (49) which is pressed in to unlock the locking member (46), so that the unlocked state of each of the cold water discharging mechanism (8) and the hot water discharging mechanism (9) can be maintained. Since, in this water dispenser, the lock member (46) and the key member (50) are provided in each of the cold water and the hot water discharging mechanisms (8 and 9), it is possible to set both the cold water and the hot water discharging mechanisms (8 and 9) to the locked state or the unlocked state; or alternatively, to set only one of the cold water and the hot water discharging mechanisms (8 and 9) to the unlocked state. Thus, this water dispenser allows the lock mechanisms for the hot water and the cold water discharging mechanisms to be set or released freely and individually, depending on the environment in which the water dispenser is used, for example, a household with small children and the like.

## Description

### TECHNICAL FIELD

The present invention relates to a water dispenser including lock mechanisms capable of blocking the discharging of drinking water.

### BACKGROUND ART

Water dispensers supply drinking water such as mineral water and the like filled in a replaceable raw water container, which is cooled by a cooling device, or heated by a heater. With a growing interest in water safety and health, water dispensers are now being used in many places such as hospitals and ordinary households.

For cases in which a water dispenser is placed in a place within the reach of small children, such as an ordinary household or a kindergarten, the water dispenser generally includes a locking mechanism on the hot water discharging side, as described in the below-identified Patent Document 1, lest a child mistakenly touches the hot water lever of the water dispenser to discharge hot water. In the water dispenser disclosed in Patent Document 1, hot water is allowed to discharge by a two-step operation: pulling forward a hot water lever and then pushing down the hot water lever (see FIG. 8, FIG. 9 and paragraphs 0072 and 0073 in Patent Document 1). In other words, the water dispenser is designed such that an on-off valve on the hot water side does not open merely by pushing down the hot water lever (see FIG. 7 and paragraph 0071 in Patent Document 1). If a rather complicated operation, such as a multi-step operation, is required in order to allow discharging of hot water, as described above, unintended discharging of hot water by children can be prevented.

### PRIOR ART DOCUMENT(S)

### PATENT DOCUMENT(S)

Patent Document 1: JP 2010-247838 A

### SUMMARY OF THE INVENTION

### PROBLEMS TO BE SOLVED BY THE INVENTION

Although the water dispenser disclosed in Patent Document 1 allows for preventing hot water from being discharged mistakenly, such a multi-step water discharging operation could be troublesome when the water dispenser is used in an environment where the locking mechanism for hot water is not necessary, for example, in a household without small children. On the other hand, in a household with small children, there is a potential risk that they could touch the cold water lever of the water dispenser to spill water on the floor, and thus, a locking mechanism for the cold water lever may also be necessary, in addition to that for the hot water lever.

Accordingly, an object of the present invention is to provide a water dispenser in which the locking mechanisms for the hot water and the cold water discharging mechanisms can be set or released freely and individually, depending on the preferred usage style of a user.

### MEANS FOR SOLVING THE PROBLEMS

In order to solve the above mentioned problems, the present invention provides:
A water dispenser comprising a cold water discharging mechanism configured to discharge cold water; and a hot water discharging mechanism configured to discharge hot water; each of the cold water discharging mechanism and the hot water discharging mechanism comprising:
   a valve body provided in a flow passage formed in each of the water discharging mechanisms;
   a locking member operable from outside so as to be movable between a locking position at which the locking member prevents the valve body from moving to an open position and an unlocking position at which the locking member does not prevent the valve body from moving to the open position; and
   a key member operable from outside so as to be movable between a first position at which the locking member is maintained in the unlocking position by the key member and a second position at which the locking member is not maintained in the unlocking position by the key member.

By providing the locking member in each of the cold water discharging mechanism and the hot water discharging mechanism as described above, the water dispenser can be used in households with small children, and the like, safely and with a peace of mind. On the other hand, for users without children and who do not prefer troublesome locking mechanisms, the locking mechanism provided by the locking member in each of the cold water and the hot water discharging mechanisms can be unlocked by operating the corresponding key member so that cold water or hot water can be discharged by a simple operation, such as operating a discharging lever. Thus, by providing the locking member and the key member in each of the cold water and the hot water discharging mechanisms, it is possible to optimize the locking mechanisms of this water dispenser to suit the preference of the user, thereby providing a high level of satisfaction to every user.

In the water dispenser having the above mentioned constitution, it is preferred that the locking members of the cold water discharging mechanism and the hot water discharging mechanism are configured to be capable of being operated independently of each other, and the key members of the cold water discharging mechanism and the hot water discharging mechanism are configured to be capable of being operated independently of each other.

For example, in households without small children, there are cases where the locking mechanisms for both the cold water and the hot water discharging mechanisms are not necessary, taking into account the convenience of the use of the water dispenser. On the other hand, in households with small children, there are cases where the locking mechanisms for both the cold water and the hot water discharging mechanisms are necessary, and cases where the locking mechanism is required only for the hot water discharging mechanism, but not for the cold water discharging mechanism. If the locking mechanisms, as well as the key members, in the cold water and the hot water discharging mechanisms are configured to be capable of being operated independently of each other, the water dispenser is able to suit the needs of various types of users.

In the water dispenser having each of the above mentioned constitutions, it is preferred that, for each of the cold water discharging mechanism and the hot water discharging mechanism:
a shaft is provided which is movable together with the valve body and formed with a constricted portion;
the locking member is provided with a through hole through which the shaft extends;
the locking member is provided with a biasing member such that under a biasing force of the biasing member, the locking member can be moved to said locking position, wherein in said locking position, the constricted portion is engaged with a peripheral edge of the through hole so that the valve body is prevented from moving to the open position;
the locking member is configured such that when the locking member is pushed in against the biasing force of the biasing member, the locking member can be moved to said unlocking position, wherein in said unlocking position, the constricted portion is disengaged from the peripheral edge of the through hole; and
the key member is configured to come into abutment with the locking member or a member configured to move together with the locking member from a direction opposite to a direction of the biasing force of the biasing member, thereby maintaining the locking member in the unlocking position.

If the locking mechanism and the unlocking mechanism having the above mentioned constitutions are provided in each of the cold water and hot water discharging mechanisms, a reliable locking function can be provided by the biasing force of the biasing member. On the other hand, when the key member is brought into abutment with the locking member or the like against the biasing force of the biasing member, the biasing force prevents the rattling of the key member, and a reliable unlocking function can be provided.

Further, in the water dispenser having the above mentioned constitutions, it is preferred that, for each of the cold water discharging mechanism and the hot water discharging mechanism;
the locking member is provided with an unlocking button configured to move together with the locking member; the unlocking button is provided with a flange portion; and the key member is provided with an engaging end portion configured to engage with the flange portion, thereby maintaining the locking member in the unlocking position.

This unlocking button is configured to be pushed in by a fingertip, when the user wishes to carry out the unlocking operation. In order for the user to accurately carry out the unlocking operation, the unlocking button is often designed to have a size larger than at least the size of the user's fingertip (for example, 1 cm or larger). Thus, by adapting a constitution in which the flange portion formed at the unlocking button having a certain size (the size large enough for the locking function to be achieved) is configured to engage with the engaging end portion formed at the key member, it is possible to secure a sufficient engaging area therebetween, and to obtain a reliable locking function provided by the key member.

### EFFECT OF THE INVENTION

In the water dispenser according to the present invention, by providing the locking member and the key member in each of the cold water discharging mechanism and the hot water discharging mechanism, it is possible to set or release the locking mechanisms for both the cold water and the hot water discharging mechanisms; or to set the locking mechanism for only one of the cold water and hot water discharging mechanisms, and to release the locking mechanism for the other water discharging mechanism, depending on the specific usage environment corresponding to the family structure of the user. By allowing for a free and individual control of the lock mechanisms for the cold water and/or the hot water discharging mechanisms, the water dispenser of the present invention is capable of providing a high level of satisfaction to every user.

### BRIEF DESCRIPTION OF THE DRAWINGS

FIG. 1 is a vertical sectional view of a water dispenser embodying the present invention.
FIG. 2 is a vertical sectional view of the water dispenser shown in FIG. 1, illustrating the flow of drinking water when cold water is discharged.
FIG. 3 is a vertical sectional view of the water dispenser shown in FIG. 1, illustrating the flow of drinking water when hot water is discharged.
FIG. 4 is a vertical sectional view of the water dispenser shown in FIG. 1, illustrating the flow of drinking water when sterilization by hot water is carried out.
FIGs. 5 (a) to 5 (c) are views of a cold water discharging mechanism of the water dispenser according to the present invention, when it is in a locked state: of which FIG. 5 (a) is a cross sectional view thereof; FIG. 5 (b) is a sectional view thereof, taken along the line b-b in FIG. 5 (a); and FIG. 5 (c) is a sectional view thereof, taken along the line c-c in FIG. 5 (a).
FIG. 6 is a cross sectional view of the cold water discharging mechanism of the water dispenser according to the present invention, when it is in an unlocked state (non-maintained state).
FIGs. 7 (a) to 7 (c) are views of the cold water discharging mechanism of the water dispenser according to the present invention, when it is in the unlocked state (maintained state): FIG. 7 (a) is a cross sectional view thereof; FIG. 7 (b) is a sectional view thereof, taken along the line b-b in FIG. 7 (a); and FIG. 7 (c) is a sectional view thereof, taken along the line c-c in FIG. 7 (a).
FIG. 8 is a perspective view of a portion of the cold water discharging mechanism of the water dispenser according to the present invention.
FIGs. 9 (a) to 9 (c) are perspective views of the cold water discharging mechanism and hot water discharging mechanism of the water dispenser according to the present invention.

### MODE FOR CARRYING OUT THE INVENTION

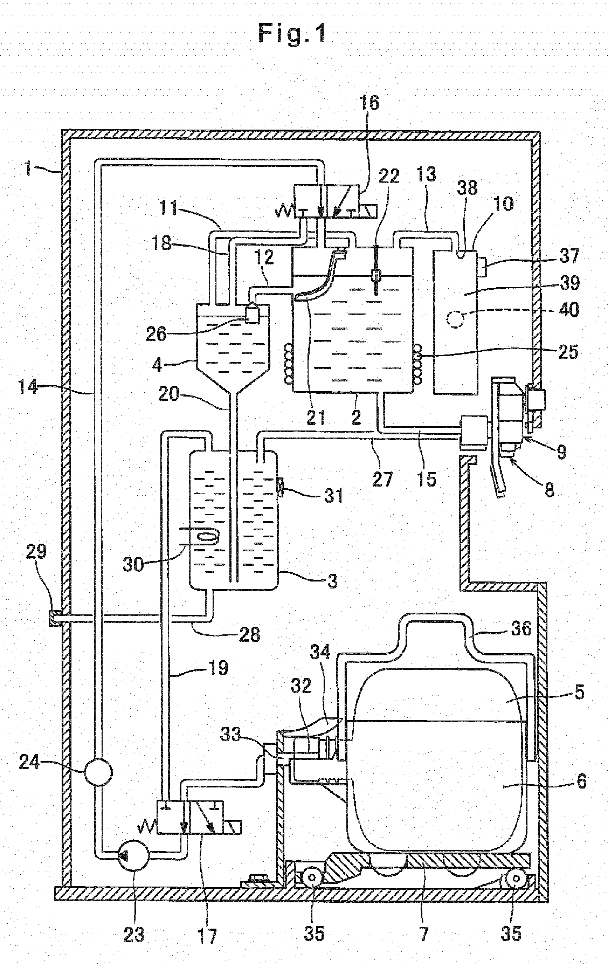

A water dispenser embodying the present invention is shown in FIG. 1. This water dispenser includes: a cold water tank 2 configured to store cooled drinking water; a hot water tank 3 configured to store heated drinking water; a buffer tank 4 provided laterally of the cold water tank 2 and containing air and drinking water in upper and lower layers; a bottle basket 6 provided at a position lower than that of the cold water tank 2 and configured to receive a replaceable raw water container 5 in a position lying on its side; a mounting table 7 onto which the bottle basket 6 is placed; a cold water discharging mechanism 8; a hot water discharging mechanism 9; an air sterilization chamber 10; and a housing 1 containing therein the cold water tank 2, the hot water tank 3, the buffer tank 4, the bottle basket 6, the mounting table 7, the cold water discharging mechanism 8, the hot water discharging mechanism 9, and the air sterilization chamber 10.

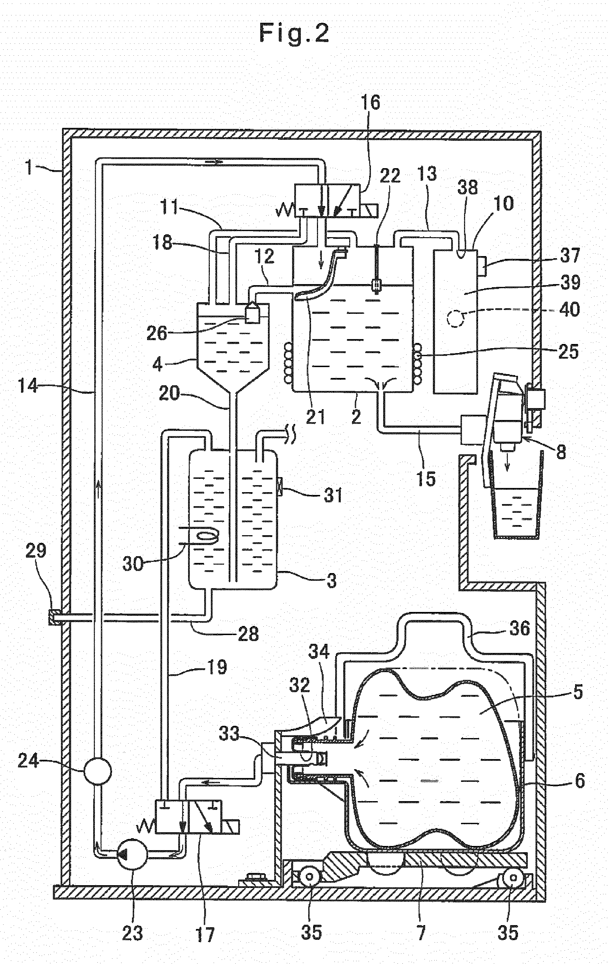

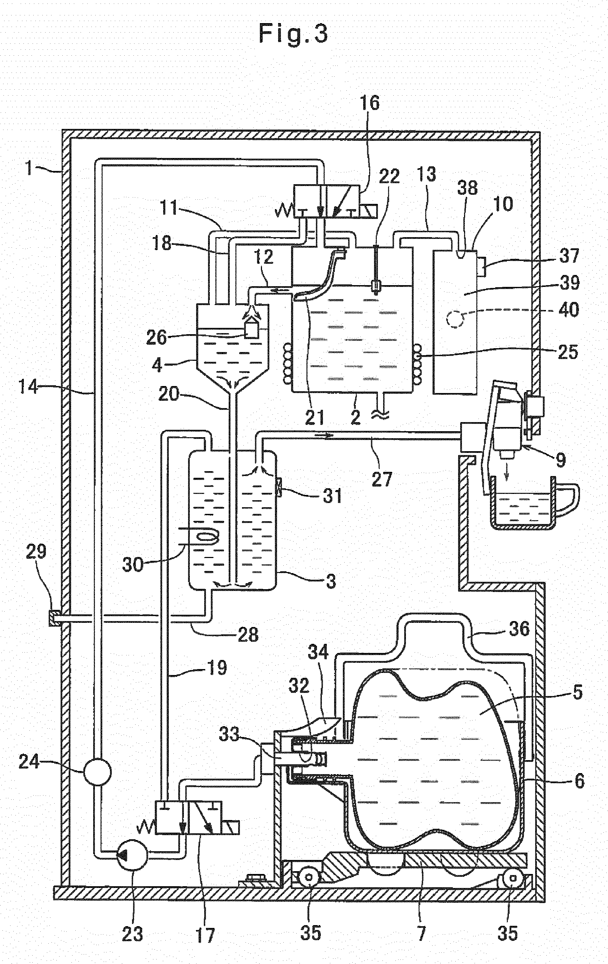

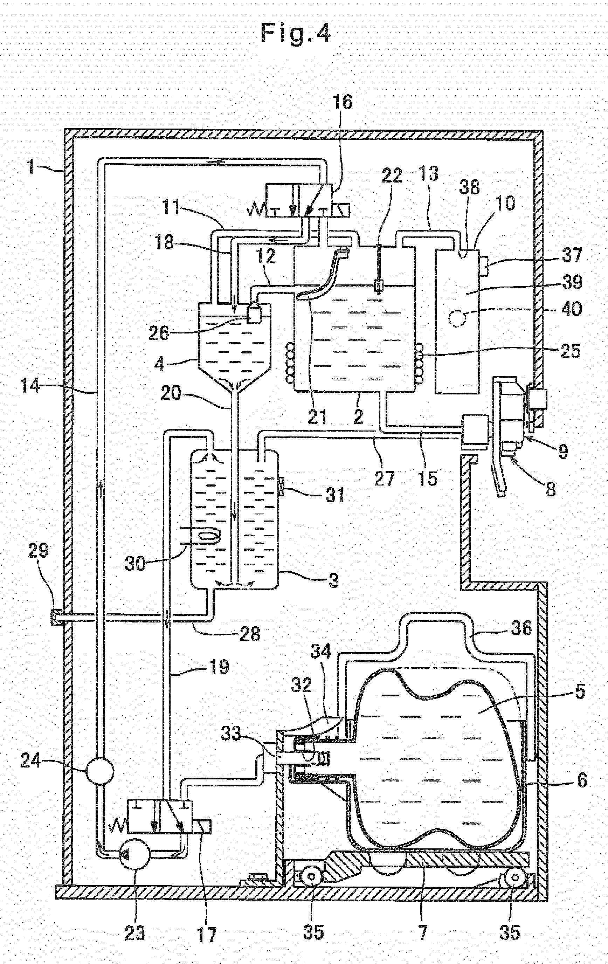

The cold water tank 2 communicates with the buffer tank 4 through an air pipe 11 and a buffer tank water supply pipe 12; communicates with the air sterilization chamber 10 through an air introduction passage 13; communicates with the raw water container 5 through a raw water pumping pipe 14; and communicates with the cold water discharging mechanism 8 through a cold water discharging pipe 15. The raw water pumping pipe 14 is provided with a first three-way valve 16 and a second three-way valve 17. The three-way valves 16 and 17 are capable of switching between first positions where a normal flow path forms and second positions where a sterilization flow path forms. When he normal flow path forms, the flow of water into a first pipe 18 for sterilization and the flow of water into a second pipe 19 for sterilization are blocked to allow drinking water in the raw water container 5 to be transferred to the cold water tank 2 through the raw water pumping pipe 14, so that cold water and hot water can be discharged, as shown in FIG. 2 and FIG. 3 to be described later. When the sterilization flow path forms, the flow of water from the raw water container 5 to the raw water pumping pipe 14 and the flow of water from the raw water pumping pipe 14 to the cold water tank 2 are blocked to form a flow of water in a closed loop, in which water is allowed to circulate through the raw water pumping pipe 14, the first pipe for sterilization 18, the buffer tank 4, the hot water tank water supply pipe 20, the hot water tank 3 and the second pipe for sterilization 19, and back to the raw water pumping pipe 14 again, as shown in FIG. 4 to be described later. In this embodiment, the three-way valves 16 and 17 are solenoid valves configured to be switched to form the sterilization flow path when energized, and to be switched to form the normal flow path when de-energized. Each of the first three-way valve 16 and the second three-way valve 17 shown in FIG. 1 may be replaced by a valve assembly comprising a plurality of two-way valves to achieve the same effect.

A guide plate 21 is provided in the upper portion of the cold water tank 2. The guide plate 21 is formed with a slope so that the direction of the flow of drinking water supplied from the raw water pumping pipe 14 can be redirected to the horizontal direction. The guide plate 21 prevents the drinking water supplied into the cold water tank 2 from spreading to the entire cold water tank 2, and thus the temperature of the cold water in the lower portion of the cold water tank 2 can be maintained low. A water level sensor 22 is provided in the cold water tank 2, and configured to detect the water level of the drinking water contained therein. When the water level detected by the water level sensor 22 falls below a predetermined limit, a pump 23 provided in the raw water pumping pipe 14 is actuated to allow transfer of drinking water from the raw water container 5 to the cold water tank 2. In general, the capacity of the cold water tank 2 is from about 2 to 4 liters.

A diaphragm pump or a gear pump can be used as the pump 23, for example. In the diaphragm pump, the reciprocation of a diaphragm increases and decreases the volume of a pump chamber provided therein, and drinking water is allowed to be pumped up and discharged corresponding to the change in the volume of the pump chamber. In the gear pump, drinking water trapped between the tooth spaces of a pair of gears and the inner surface of the casing of the gear pump is transferred by the rotation of the gears. A flow rate sensor 24 is provided in the raw water pumping pipe 14, on the side of the discharge port of the pump 23. When the flow rate sensor 24 detects that there is no raw water remaining in the raw water container 5, a container replacement lamp, which is not shown, is turned on to notify a user of this fact. A cooling device 25 is provided on the outer peripheral surface of the lower portion of the cold water tank 2. The cooling device 25 is capable of cooling the drinking water in the cold water tank 2 to about 5 degrees Celsius.

The buffer tank 4 communicates with the cold water tank 2 through the air pipe 11 and the buffer tank water supply pipe 12; communicates with the first three-way valve 16 through the first pipe 18 for sterilization, and communicates with the hot water tank 3 through the hot water tank water supply pipe 20. A float valve 26 is provided at the end portion of the buffer tank water supply pipe 12 on the side of the buffer tank 4. When the drinking water in the buffer tank 4 is increased to exceed a predetermined level due to the water being transferred from the cold water tank 2, the float valve 26 blocks the end portion of the buffer tank water supply pipe 12 to prevent the drinking water in the buffer tank 4 from flowing back into the cold water tank 2. Thus, when hot water flows back from the hot water tank 3 into the buffer tank 4 through the hot water tank water supply pipe 20, the float valve 26 prevents this hot water from further flowing back into the cold water tank 2 through the buffer tank water supply pipe 12. Further, when the sterilization by hot water circulation to be described later is carried out, the flowing back of the hot water from the buffer tank 4 into the cold water tank 2 can also be prevented. This prevents the temperature rise of the cold water in the cold water tank 2, and the proliferation of bacteria in the cold water tank 2 associated with the temperature rise. The lower portion of the buffer tank 4 is formed in the shape of a cone whose diameter decreases as it gets closer to its bottom end. Therefore, the buffer tank 4 has no corners at its lower portion where drinking water tends to remain when the sterilization by hot water circulation to be described later is carried out. In general, the capacity of the buffer tank 4 is from about 0.2 to 0.5 liters.

The hot water tank 3 communicates with the buffer tank 4 through the hot water tank water supply pipe 20; communicates with the second three-way valve 17 through the second pipe 19 for sterilization; and communicates with the hot water discharging mechanism 9 through the hot water discharging pipe 27. The hot water tank 3 is also connected to a drain pipe 28 through which water remaining in the hot water tank 3 is drained. Other than the time when the water remaining in the hot water tank 3 is drained, the outlet port of the drain pipe 28 is closed with a plug 29. A heater 30 is provided inside the hot water tank 3, and configured to heat the drinking water contained therein. The temperature of the heated drinking water is detected by a temperature sensor 31 attached to the wall of the hot water tank 3. The hot water tank 3 differs from the cold water tank 2 and the buffer tank 4 in that it has a structure in which the entire tank is filled with drinking water. The interior of the hot water tank 3 is pressurized by the weight of the drinking water contained in the buffer tank 4, which is provided at a position higher than that of the hot water tank 3, and the pressure applied to the hot water tank 3 allows for discharging of hot water contained therein through the hot water discharging mechanism 9. In general, the capacity of the hot water tank 3 is from about 1 to 2 liters. While a sheathed heater is used as the heater 30 in this embodiment, an embodiment is also possible in which a band heater is wrapped around the outer periphery of hot water tank 3.

The raw water container 5, which is received in the bottle basket 6, is provided with a water outlet port 32 in which a joint portion 33 of the raw water pumping pipe 14 is inserted in the horizontal direction. The joint portion 33 comprises a hollow cylindrical member through which drinking water is allowed to flow freely, and provided at a position higher than that of the pump 23, which is configured to pump up drinking water. A guide member 34 is provided in the vicinity of the joint portion 33. When the water outlet port 32 of the raw water container 5 is inserted onto the joint portion 33, the guide member 34 guides the raw water container 5 so that the axes of the water outlet port 32 and the joint portion 33 coincide. Rollers 35 are provided on the bottom side of the mounting table 7 onto which the bottle basket 6 is placed, and on the upper side of the bottom plate of the housing 1. The rolling movement of the rollers 35 allows the bottle basket 6 in which the raw water container 5 is received to be easily settled into, and taken out of the housing 1. The bottle basket 6 is provided with a handle 36, and by holding the handle 36, the bottle basket 6 can be easily placed on the mounting table 7. The raw water container 5 used in this embodiment is a soft type container made of a thin sheet of a polyethylene terephthalate (PET) resin or polyethylene (PE) resin. This type of raw water container 5 has a relatively high flexibility, and collapses to reduce its internal volume as the drinking water contained therein is pumped out. In general, a new raw water container 5 is filled with from about 10 to 12 liters of drinking water.

Although a soft type container is used as the raw water container 5 in this embodiment, it is also possible to use a rigid type container whose volume does not change even when the drinking water contained therein is pumped out, or a bag-in-box type container in which a bag made of a highly flexible resin film is placed inside a box such as a corrugated carton.

The air sterilization chamber 10 includes a hollow casing 39 provided with an air inlet port 37 and an ozone outlet port 38; and an ozone generator 40 provided within the casing 39 and configured to convert oxygen in the air to ozone. The ozone outlet port 38 communicates with the cold water tank 2 through the air introduction passage 13. By transferring the ozone generated in the air sterilization chamber 10 to the cold water tank 2 and the buffer tank 4, and by sterilizing air contained in these tanks with ozone, the sanitation inside the cold water tank 2 and the buffer tank 4 can be improved. The ozone generator 40 may be a low-pressure mercury lamp, a silent discharge apparatus, or the like.

When cold water is discharged, the energization to both the three-way valves 16 and 17 is terminated, so that the first three-way valve 16 is switched to secure the flow of water from the raw water pumping pipe 14 toward the cold water tank 2, and the second three-way valve 17 is switched to secure the flow of water from the raw water container 5 toward the raw water pumping pipe 14, as shown in FIG. 2. This forms the normal flow path, which allows for discharging of cold water. If the cold water discharging mechanism 8 is operated at this time, cold water is discharged through the cold water discharging mechanism 8. When the water level sensor 22 detects the fall of the water level in the cold water tank 2, as the cold water is discharged, the pump 23 is actuated to carry out the transfer of drinking water from the raw water container 5 to the cold water tank 2. By the transfer of drinking water, the water level in the cold water tank 2 rises again to recover the previous level.

When hot water is discharged, the energization to both the three-way valves 16 and 17 is terminated, so that the first three-way valve 16 is switched to secure the flow of water from the raw water pumping pipe 14 toward the cold water tank 2, and the second three-way valve 17 is switched to secure the flow of water from the raw water container 5 toward the raw water pumping pipe 14, as shown in FIG. 3. This forms the normal flow path, which allows for discharging of hot water. If the hot water discharging mechanism 9 is operated at this time, hot water is discharged through the hot water discharging mechanism 9. When the amount of hot water in the hot water tank 3 is decreased, as the hot water is discharged, drinking water is promptly supplied from the buffer tank 4 to the hot water tank 3 through the hot water tank water supply pipe 20, by the amount of water decreased in the hot water tank 3. This causes the water level in the buffer tank 4 to fall, and this fall in the water level causes the float valve 26 to move away from its position blocking the end portion of the buffer tank water supply pipe 12 to allow water to flow therethrough, and drinking water is supplied from the cold water tank 2 to the buffer tank 4 through the buffer tank water supply pipe 12, until the water level in the buffer tank 4 is increased to push up the float valve 26 back to the position blocking the end portion of the buffer tank water supply pipe 12. When the water level sensor 22 detects the fall of the water level in the cold water tank 2, as a result of water being supplied to the buffer tank 4 therefrom, the pump 23 is actuated to carry out the transfer of drinking water from the raw water container 5 to the cold water tank 2. By the transfer of drinking water, the water level in the cold water tank 2 rises again to recover the previous level.

When the sterilization by hot water circulation is carried out, both the three-way valves 16 and 17 are energized, so that the first three-way valve 16 is switched to secure the flow of water from the raw water pumping pipe 14 toward the buffer tank 4, and the second three-way valve 17 is switched to secure the flow of water from the hot water tank 3 to the raw water pumping pipe 14, as shown in FIG. 4. This forms the sterilization flow path, which is a flow path in a closed loop, in which water is allowed to circulate through the raw water pumping pipe 14, the first pipe for sterilization 18, the buffer tank 4, the hot water tank water supply pipe 20, the hot water tank 3 and the second pipe for sterilization 19, and back to the raw water pumping pipe 14 again. By allowing hot water to circulate within the sterilization flow path by the pump 23, the sterilization inside the sterilization flow path can be carried out. The heater 30 is actuated as necessary so that the temperature of hot water is maintained at a predetermined temperature (for example, 85 degrees Celsius) or higher, which is effective for sterilization. During the sterilization, the pump 23 can be stopped as necessary. This is because, as long as hot water having a temperature of not less than the predetermined temperature is allowed to stay in the sterilization flow path, a sufficient sterilization effect can be obtained.

The cold water tank 2 is not included in the sterilization flow path which is formed in a closed path, as described above. Therefore, there is no potential risk that cold water in the cold water tank 2 is warmed up, and it is possible to provide a user with cold water cooled to a low temperature, even while the sterilization by hot water circulation is being carried out.

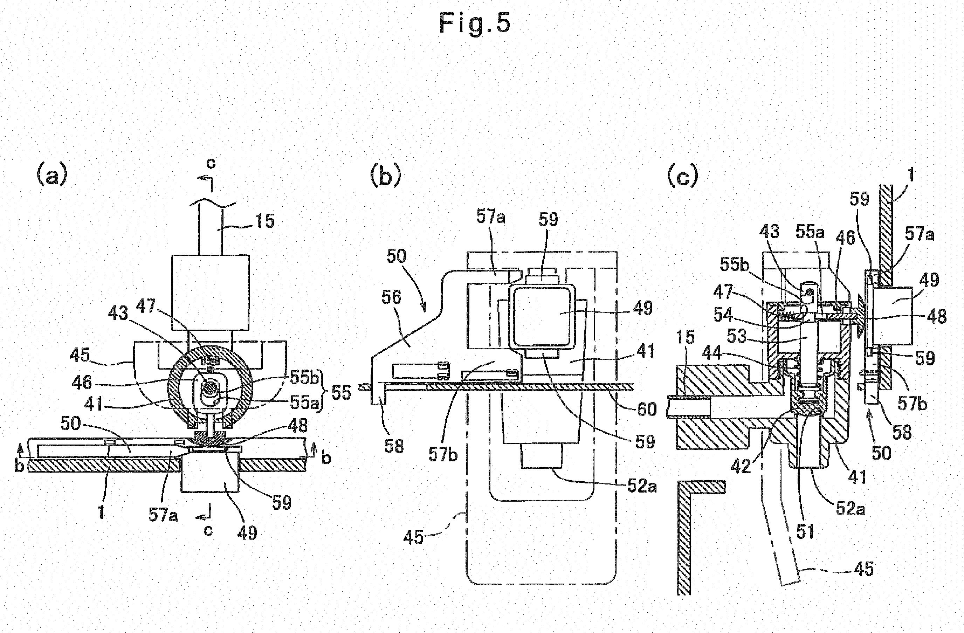

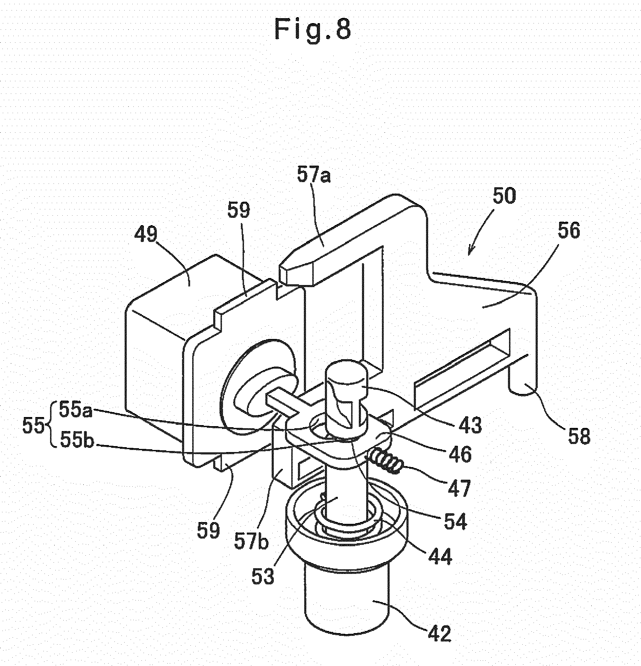

FIGs. 5 to 8 show the cold water discharging mechanism 8 of the water dispenser according to the present invention. In FIG. 8, some of the parts included in the cold water discharging mechanism 8 are not shown, in order to simplify the figure. The cold water discharging mechanism 8 includes: a faucet body 41 connected to the cold water discharging pipe 15; a valve body 42 made of an elastic material and provided in a cold water flow passage formed inside the faucet body 41; a faucet stem 43 configured to move the valve body 42 between open and closed positions; a faucet spring 44 biasing the faucet stem 43 in the valve closing direction; a faucet lever 45 configured to move the faucet stem 43 in the valve opening direction against the biasing force of the faucet spring 44; a locking member 46 configured to restrict the movement of the faucet stem 43 in the valve opening direction; a locking spring 47 which is a biasing member biasing the locking member 46 toward a locking position; a faucet button 48 configured to push in the locking member 46 against the biasing force of the lock spring 47 toward an unlocking position; an unlocking button 49 covering the faucet button 48; and a key member 50 configured to engage with the unlocking button 49, thereby maintaining the locking member 46 in the unlocking position.

When the cold water discharging mechanism 8 is in the locked state (see FIG. 5), the valve body 42 is in contact with a valve seat 51 provided in the flow passage formed inside the faucet body 41 by the biasing force of the faucet spring 44, and thereby blocking the discharging of cold water from a cold water outlet port 52a. A shaft portion 53 of the faucet stem 43 is formed with a constricted portion 54 whose diameter is smaller than that of the remaining portion of the shaft portion 53. The locking member 46 is provided with a through hole 55 through which the shaft portion 53 of the faucet stem 43 extends. The through hole 55 consists of a main hole portion 55a whose diameter is larger than that of the shaft portion 53; and an auxiliary hole portion 55b whose diameter is smaller than that of the shaft portion 53 and whose inner periphery continues to that of the main hole portion 55a. When the cold water discharging mechanism 8 is in the locked state, the constricted portion 54 is engaged with the peripheral edge of the auxiliary hole portion 55b, and the shaft portion 53 cannot be moved in the axial direction thereof. In other words, the valve body 42 configured to move together with the shaft portion 53 cannot move in the valve opening direction. Since the constricted portion 54 is configured to engage with the auxiliary hole portion 55b having a smaller diameter than that of the main hole portion 55a, as described above, the area of engagement between the auxiliary hole portion 55b with the constricted portion 54 is increased. This allows the constricted portion 54 to be firmly engaged with the auxiliary hole portion 55b so that a secure locking function is provided. The auxiliary hole portion 55b does not need to be provided as long as the secure engagement of the constricted portion 54 is achieved, and an embodiment is also possible in which the constricted portion 54 is engaged with the peripheral edge of the main hole portion 55a. Further, an embodiment is also possible in which the through hole 55 is not provided in the locking member 46, and the constricted portion 54 is engaged with the peripheral edge of the locking member 46.

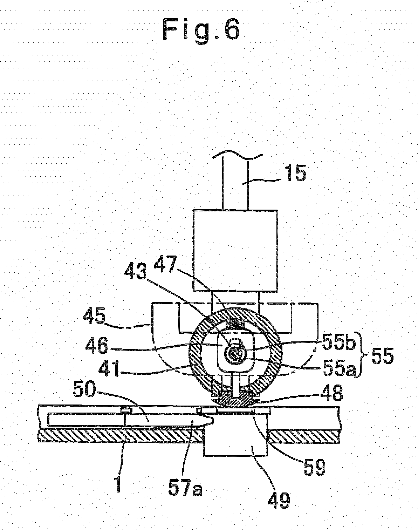

When the unlocking button 49 configured to move together with the locking member 46 and the faucet button 48 is pushed in against the biasing force of the lock spring 47, while the cold water discharging mechanism is in this locked state, the constricted portion 54 moves, relative to the locking member 46, from within the auxiliary hole portion 55b to within the main hole portion 55a, and the cold water discharging mechanism 8 shifts to the unlocked state in which the shaft portion 53 is capable of moving in the axial direction (see FIG. 6). When the lower end side of the faucet lever 45 is pushed in toward the rear side of the water dispenser, while the cold water discharging mechanism 8 is in the unlocked state, the faucet stem 43 fixed to the upper end of the faucet lever 45 is pulled upward against the biasing force of the faucet spring 44, based on the principle of leverage, with the upper end of the faucet lever 45 being its fulcrum. This causes the valve body 42 provided at the lower end of the faucet stem 43 to deform elastically, and a flow passage is formed between the lower portion of the valve body 42 and the valve seat 51, thereby allowing for discharging of cold water through the flow passage formed therebetween.

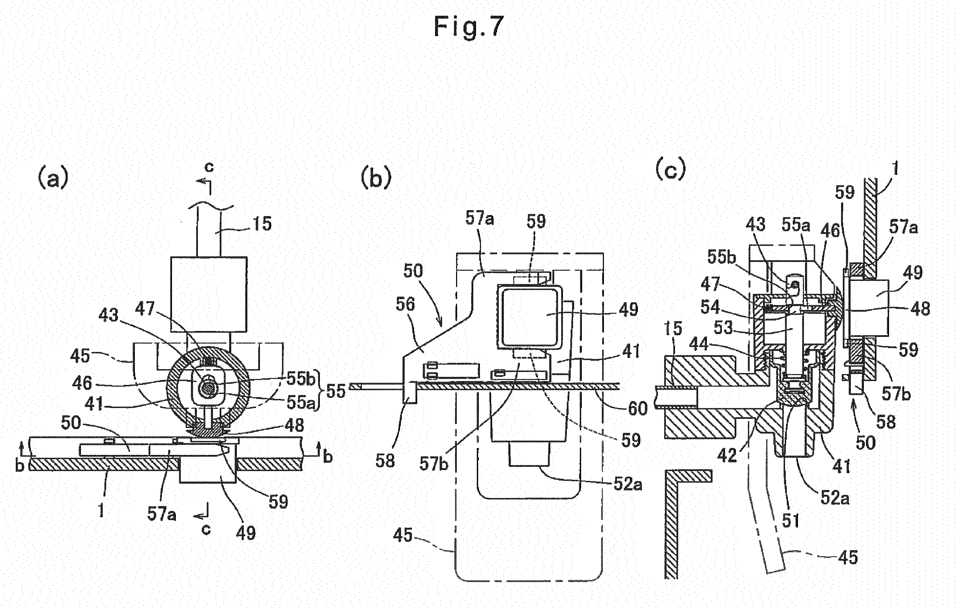

The key member 50 is a member in the shape of a Japanese character "⊐", and includes a base portion 56; and two engaging end portions 57a and 57b extending, respectively, from the upper and lower end portions of the base portion 56, in a horizontal direction. A slide knob 58 is formed at the lower end of the base portion 56, and configured to be held in order to slide the key member 50. In order to maintain the unlocked state shown in FIG. 6, the key member 50 needs to be slid by holding the slide knob 58, with the lock release button 49 pressed in, so that the engaging end portions 57a and 57b of the key member 50 come into abutment with flange portions 59 formed at the unlocking button 49 which is configured to move together with the lock member 46, from the direction opposite to that of the biasing force of the lock spring 47 (see FIG. 7). This prevents the locking member 46 from returning to the locking position again. By maintaining the unlocked state of the cold water discharging mechanism 8 by the key member 50, as described above, cold water can be discharged from the cold water outlet port 52a merely by operating the faucet lever 45, without unlocking the cold water discharging mechanism 8 by pressing the unlocking button 49 every time of use. This serves to significantly improve the user-friendliness of the water dispenser for users without small children, who do not require any locking mechanism.

As shown in FIG. 5 (b) and the like, the slide knob 58 protrudes downward from an elongated hole formed in a decorative cover 60 provided at the front surface of the water dispenser, in a minimum length (from about several millimeters to several ten millimeter) required to be held to operate the key member 50. Since the protruded length of the slide knob 58 is restricted to the minimum level, it is possible to prevent an undesired situation in which the slide knob 58 is unexpectedly operated by a small child, or in which the slide knob 58 is mistakenly touched by a user during the cold water discharging operation, to change the locking status of the cold water discharging mechanism 8.

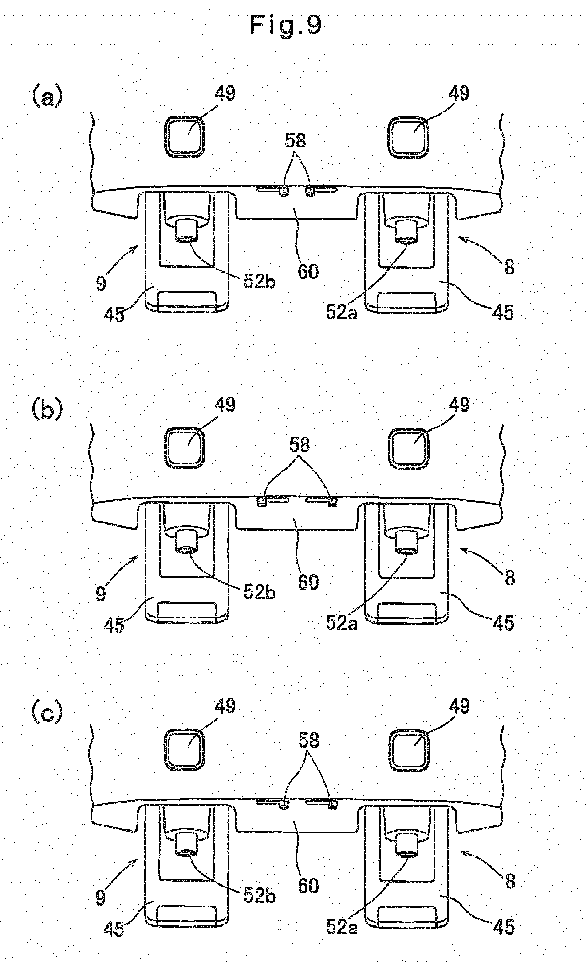

While the structure of the cold water discharging mechanism 8 was described above, an unlocking mechanism composed of a locking member 46 and a key member 50 which are identical to those in the cold water discharging mechanism 8 can be provided in the hot water discharging mechanism 9, to control the discharging of hot water from a hot water outlet port 52b. By providing this unlocking mechanism in each of the cold water discharging mechanism 8 and the hot water discharging mechanism 9, it is possible to select any of the following states: a state in which the locking functions of both the cold water and hot water discharging mechanisms 8 and 9 are enabled (see FIG. 9 (a)); a state in which the locking functions of both the cold water and hot water discharging mechanisms 8 and 9 are released (see FIG. 9 (b)); and a state in which the locking function of one of the cold water and the hot water discharging mechanisms 8 and 9 is enabled (see FIG. 9 (c), in which the hot water discharging mechanism 9 is set to the locked state). This allows every user to use this water dispenser conveniently and safely.

In the above mentioned embodiment, the engaging end portions 57a and 57b of the key member 50 are configured to come into abutment with the flange portions 59 formed at the lock release button 49 to maintain the unlocked state. However an embodiment is also possible in which the key member 50 is directly engaged with the faucet button 48 or the locking member 46 configured to move together with the unlocking button 49. The shape of the key member 50 is not limited to the shape of "⊐", and it can be changed as appropriate, as long as the function thereof to maintain the unlocked state is achieved.

Further, although the water dispenser of the above mentioned embodiment includes three tanks: the cold water tank 2, hot water tank 3, and the buffer tank 4, the unlocking mechanism according to the present invention can be widely used in other types of water dispensers, such as one including only two tanks, namely the cold water tank 2 and the hot water tank 3, and not including the buffer tank 4.

Still further, while in the above mentioned embodiment, the raw water container 5 is placed in a position lying on its side at the lower portion of the water dispenser, the arrangement of the raw water container 5 is not limited thereto, and the unlocking mechanism according to the present invention can be widely used in other types of water dispensers, such as one in which the raw water container 5 is placed at the upper portion of the water dispenser, or one in which the raw water container 5 is placed in a position standing on its bottom.

### DESCRIPTION OF SYMBOLS

- 1: housing
- 2: cold water tank
- 3: hot water tank
- 4: buffer tank
- 5: raw water container
- 6: bottle basket
- 7: mounting table
- 8: cold water discharging mechanism
- 9: hot water discharging mechanism
- 10: air sterilization chamber
- 11: air pipe
- 12: buffer tank water supply pipe
- 13: air introduction passage
- 14: raw water pumping pipe
- 15: cold water discharging pipe
- 16: first three-way valve
- 17: second three-way valve
- 18: first pipe for sterilization
- 19: second pipe for sterilization
- 20: hot water tank water supply pipe
- 21: guide plate
- 22: water level sensor
- 23: pump
- 24: flow rate sensor
- 25: cooling device
- 26: float valve
- 27: hot water discharging pipe
- 28: drain pipe
- 29: plug
- 30: heater
- 31: temperature sensor
- 32: water outlet port
- 33: joint portion
- 34: guide member
- 35: roller
- 36: handle
- 37: air inlet port
- 38: ozone outlet port
- 39: casing
- 40: ozone generator
- 41: faucet body
- 42: valve body
- 43: faucet stem
- 44: faucet spring
- 45: faucet lever
- 46: lock member
- 47: lock spring (biasing member)
- 48: faucet button
- 49: lock release button
- 50: key member
- 51: valve seat
- 52a: cold water outlet port
- 52b: hot water outlet port
- 53: shaft portion
- 54: constricted portion
- 55: through hole
- 55a: main hole
- 55b: auxiliary hole
- 56: base portion
- 57 (57a, 57b): engaging end portions
- 58: slide knob
- 59: flange portion
- 60: decorative cover

## Claims

1. A water dispenser comprising a cold water discharging mechanism (8) configured to discharge cold water; and a hot water discharging mechanism (9) configured to discharge hot water; each of the cold water discharging mechanism (8) and the hot water discharging mechanism (9) comprising:
a valve body (42) provided in a flow passage formed in each of the water discharging mechanisms (8, 9);
a locking member (46) operable from outside so as to be movable between a locking position at which the locking member (46) prevents the valve body (42) from moving to an open position and an unlocking position at which the locking member (46) does not prevent the valve body (42) from moving to the open position; and
a key member (50) operable from outside so as to be movable between a first position at which the locking member (46) is maintained in the unlocking position by the key member (50) and a second position at which the locking member (46) is not maintained in the unlocking position by the key member (50).

2. The water dispenser according to claim 1, wherein the locking members (46) of the cold water discharging mechanism (8) and the hot water discharging mechanism (9) are configured to be capable of being operated independently of each other, and wherein the key members (50) of the cold water discharging mechanism (8) and the hot water discharging mechanism (9) are configured to be capable of being operated independently of each other.

3. The water dispenser according to claim 1 or 2, wherein, for each of the cold water discharging mechanism (8) and the hot water discharging mechanism (9):
a shaft (53) is provided which is movable together with the valve body (42) and formed with a constricted portion (54);
the locking member (46) is provided with a through hole (55) through which the shaft (53) extends;
the locking member (46) is provided with a biasing member (47) such that under a biasing force of the biasing member (47), the locking member (46) can be moved to said locking position, wherein in said locking position, the constricted portion (54) is engaged with a peripheral edge of the through hole (55) so that the valve body (42) is prevented from moving to the open position;
the locking member (46) is configured such that when the locking member (46) is pushed in against the biasing force of the biasing member (47), the locking member (46) can be moved to said unlocking position, wherein in said unlocking position, the constricted portion (54) is disengaged from the peripheral edge of the through hole (55); and
the key member (50) is configured to come into abutment with the locking member (46) or a member configured to move together with the locking member (46) from a direction opposite to a direction of the biasing force of the biasing member (47), thereby maintaining the locking member (46) in the unlocking position.

4. The water dispenser according to claim 3, wherein, for each of the cold water discharging mechanism (8) and the hot water discharging mechanism (9);
the locking member (46) is provided with an unlocking button (49) configured to move together with the locking member (46); the unlocking button (49) is provided with a flange portion (59); and the key member (50) is provided with an engaging end portion (57) configured to engage with the flange portion (59), thereby maintaining the locking member (46) in the unlocking position..
